# EUROPÄISCHE PATENTANMELDUNG

(11) **EP 1 360 886 A1**
(43) Veröffentlichungstag der Anmeldung: **12.11.2003**
(21) Anmeldenummer: 03010077.0
(22) Anmeldetag: 03.05.2003
(51) Int. Cl.: A01B 59/06

(54) **Anbauvorrichtung für ein Arbeitsfahrzeug**

(30) Priorität: 11.05.2002 DE 10220998
(71) Anmelder: DEERE & COMPANY, Moline, Illinois 61265-8098 (US)
(72) Erfinder: Bernhardt, Gerd, Prof. Dr.-Ing. habil, 01728 Hänichen (DE); Fedotov, Sergiy, 01069 Dresden (DE); Rudik, Ruslan, 01069 Dresden (DE)
(74) Vertreter: Lau-Loskill, Philipp, Dipl.-Phys.

(57) **Zusammenfassung**

Es wird eine Anbauvorrichtung für ein Arbeitsfahrzeug beschrieben mit gelenkig am Fahrzeugrumpf befestigbaren Verbindungselementen (18, 20, 24, 34, 36, 52, 56, 58, 72, 74), an deren freien Enden unmittelbar, bzw. mittelbar über einen Gerätekoppelrahmen (32), ein Gerät gelenkig befestigbar ist. Dabei sind wenigstens ein oberes Verbindungselement (24, 52, 56, 58), zwei untere Verbindungselemente (18, 20, 72, 74) und zwei längenverstellbare Hubverbindungselemente (34, 36), durch die sich das Gerät anheben und absenken lässt, vorgesehen.

Um die Funktionalität und die Produktivität der Anbauvorrichtung auf möglichst kostengünstige Weise den jeweiligen Anforderungen anpassen zu können, wird vorgeschlagen, dass die Hubverbindungselemente (34, 36) jeweils im Bereich der freien Enden des zugehörigen unteren Verbindungselements (18, 20, 72, 74) angreifen. Des Weiteren ist ein Bausatz aus wahlweise starren und längenverstellbaren Verbindungselementen (18, 20, 24, 34, 36, 52, 56, 58, 72, 74) vorgesehen. Durch Austauschen, Hinzufügen bzw. Entfernen von Verbindungselementen (18, 20, 24, 52, 56, 58, 72, 74) des Bausatzes ist die Funktionalität der Anbauvorrichtung veränderbar. Es lässt sich beispielsweise eine Umrüstung zwischen einer einfachen Dreipunkt-Anbauvorrichtung und einer sogenannten Hexapod-Hitch vornehmen.

## Beschreibung

Die Erfindung betrifft eine Anbauvorrichtung für ein Arbeitsfahrzeug mit gelenkig am Fahrzeugrumpf befestigbaren Verbindungselementen, an deren freien nicht am Fahrzeugrumpf angelenkten Enden unmittelbar bzw. mittelbar über einen Gerätekoppelrahmen ein Gerät gelenkig befestigbar ist. Die Anbauvorrichtung enthält wenigstens ein oberes Verbindungselement, zwei untere Verbindungselemente und zwei längenverstellbare Hubverbindungselemente, durch die sich das Gerät anheben und absenken lässt. Als Fahrzeugrumpf kann beispielsweise ein Getriebegehäuse, ein Fahrzeugrahmen oder ein anderes fest mit der Fahrzeugstruktur verbundenes Bauteil dienen.

Anbauvorrichtungen mit einem oberen Verbindungselement, auch Oberlenker genannt, zwei unteren Verbindungselementen, auch Unterlenker genannt, und zwei Hubverbindungselementen, die als Hubstangen oder Hubzylinder ausgebildet sind und in einem mittleren Bereich der Unterlenker angreifen, sind als Dreipunkt-Gerätekopplungen bekannt und werden beispielsweise durch die ISO 730 definiert. Sie finden Anwendung bei Arbeitsfahrzeugen, insbesondere bei Landmaschinen und Traktoren und dienen der Kopplung unterschiedlicher Geräte. Die Funktionalität derartiger Dreipunkt-Gerätekopplungen ist jedoch beschränkt, da durch die Hubzylinder lediglich ein Anheben und Absenken der Unterlenker möglich ist. Andere Bewegungen lassen sich durch eine Steuerung der Hubzylinder nicht ausführen.

Es wurde auch vorgeschlagen, als Oberlenker einen Hydraulikzylinder zu verwenden, so dass sich das angebaute Gerät um eine horizontale, quer zur Fahrzeuglängsachse verlaufende Achse verkippen lässt. Des Weiteren ist es bekannt, Seitenstreben zu verwenden, die seitlich an den Unterlenkern angreifen, und das seitliche Auslenken der Unterlenker beeinflussen. Die Seitenstreben können längenverstellbar sein und sich hydraulisch betätigen lassen. Neben einer seitlichen Stabilisierung der Unterlenker können die Seitenstreben dazu dienen, die seitliche Ausrichtung des Arbeitsgerätes zu beeinflussen. Jedoch bleibt auch durch diese Maßnahmen die Funktionalität der Anbauvorrichtung begrenzt.

Um die Funktionen von Anbauschnittstellen zu erweitern und Bewegungen des angebauten Geräts in allen sechs Freiheitsgraden zuzulassen, wurde durch die EP-A-1 095 549 vorgeschlagen, zwischen Fahrzeug und Gerät sechs längenverstellbare Verbindungselemente vorzusehen, die in geschlossenen Ketten, insbesondere nach Art eines Hexapoden angeordnet sind.

Somit kann man sich zwischen einerseits einem Arbeitsfahrzeug mit einer konventionellen Dreipunktanbauvorrichtung, gegebenenfalls mit einigen Zusatzfunktionen, und andererseits einem Arbeitsfahrzeug mit einer sogenannten Hexapod-Hitch entscheiden, wobei die Hexapod-Hitch mit ihren vielen Funktionen nicht in jedem Betrieb benötigt wird.

Sechs Freiheitsgrade werden in der Praxis nicht immer benötigt (z. B. wenn ein Gerät durch das Fahrzeug lediglich gezogen werden soll). Andererseits ist es wünschenswert, das man sich durch die Entscheidung für eine einfache Anbauvorrichtung nicht den Zugang zu einer verbesserten Funktionalität und zu einem verbesserten Komfort versperrt. Es wäre daher anzustreben, die Möglichkeit zu schaffen, eine zunächst kostengünstig beschaffte Anbauvorrichtung nachträglich je nach den Anforderungen der Praxis aufzurüsten.

Die der Erfindung zugrunde liegende Aufgabe wird darin gesehen, eine Anbauvorrichtung der eingangs genannten Art anzugeben, durch welche die vorgenannten Probleme überwunden werden. Insbesondere soll sich die Funktionalität und Produktivität der Anbauvorrichtung auf möglichst kostengünstige Weise den jeweiligen Anforderungen anpassen lassen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß greifen bei der eingangsgenannten Anbauvorrichtung die Hubverbindungselemente nicht in einem mittleren Bereich sondern jeweils im Bereich der nicht am Fahrzeugrumpf angelenkten freien, gegebenenfalls ausfahrbaren, Enden des zugehörigen unteren Verbindungselements an. Des Weiteren ist ein Bausatz aus wahlweise einerseits starren und andererseits längenverstellbaren Verbindungselementen vorgesehen, der derart zusammengestellt ist, dass durch Austauschen, Hinzufügen bzw. Entfernen von Verbindungselementen des Bausatzes die Funktionalität der Anbauvorrichtung veränderbar ist. Bei den starren Verbindungselementen handelt es sich um solche, deren Länge sich zwar gegebenenfalls durch mechanische Mittel einstellen lässt, deren Länge sich jedoch nicht durch eine Steuerung verstellen lässt. Die Länge der längenverstellbaren Verbindungselemente lässt sich hingegen durch eine Steuerung automatisch einstellen.

Die Erfindung stellt damit einen Bausatz zur Ausbildung einer Anbauvorrichtung eines Arbeitsfahrzeugs bereit, der es dem Endanwender ermöglicht, die Geräteschnittstelle seines Arbeitsfahrzeugs nach eigenen Wünschen und finanziellen Möglichkeiten zu gestalten und bei Bedarf durch Umrüsten, insbesondere durch Austausch, Hinzufügen und Entfernen von Bauelementen die Funktionalität, die Produktivität und den Komfort der Anbauvorrichtung an die jeweiligen Anforderungen anzupassen. Insbesondere ist es möglich eine einfache Dreipunkt-Hitch, die einer bisher üblichen Anbauvorrichtung ähnlich ist, durch einfache und rasch durchführbare Umrüstmaßnahmen schrittweise Aufzurüsten bis sich die vielseitige Funktionalität einer Hexapod-Hitch ergibt. Der Bausatz kann aus wenigen Typen gleichartiger Verbindungselemente bestehen. Ein bevorzugter Bausatz besteht insbesondere aus sechs im Wesentlichen identischen längenverstellbaren Verbindungselementen mit den zugehörigen Ansteuermitteln, zwei starren Unterlenkern und einem starren Oberlenker, dessen Länge gegebenenfalls mechanisch einstellbar ist. Im Bedarfsfall können noch weitere Bauteile hinzutreten, beispielsweise ein Gerätekoppelrahmen und starre oder längenverstellbare Seitenstabilisatoren. Die Bereitstellung eines Bausatzes ermöglicht es dem Anwender, zunächst eine einfache Anbauvorrichtung zu beschaffen und diese im Bedarfsfall durch Zukauf weiterer Komponenten zu ergänzen.

Es ist von besonderem Vorteil alle längenverstellbaren Verbindungselemente des Bausatzes, insbesondere die oberen und unteren Verbindungselemente und die Hubverbindungselemente, im Wesentlichen identisch auszubilden. Hierdurch lassen sich die Anforderungen an die Steuerung senken. Durch die Vielzahl identischer Teile, können die Herstellungskosten und Lagerhaltungskosten des Bausatzes geringgehalten werden.

Jedes längenverstellbare Verbindungselement kann jeweils einen hydraulischen oder elektrischen Antrieb aufweisen, welcher der automatischen Längenverstellung dient. Es hat sich als vorteilhaft herausgestellt, Hydraulikzylinder zu verwenden. Diese können insbesondere als doppelseitig wirkenden Hydraulikzylinder ausgebildet sein.

Von besonderem Vorteil ist es, die Gelenk- oder Anlenkstellen für die Verbindungselemente derart vorzusehen, dass sich die Verbindungselemente in geschlossenen kinematischen Ketten anordnen lassen. Dies ermöglicht die Aufrüstung zu einer Anbauvorrichtung, in der die Verbindungselemente nach Art eines Hexapoden angeordnet sind. Einzelheiten dieser Struktur sind in der EP-A-1 095 549 ausführlich beschrieben worden.

Um eine volle Funktionalität zu gewährleisten ist es von Vorteil, die gelenkige Kopplung zwischen Verbindungselement und Fahrzeugrumpf bzw. zwischen Verbindungselement und Koppelrahmen oder Gerät als Anlenkstelle auszubilden, die eine Relativbewegung in wenigstens zwei Freiheitsgraden erlaubt. Geeignet sind beispielsweise Kreuzgelenke mit zueinander um 90° versetzt angeordneten Schwenkachsen, die zwei rotatorische Freiheitsgrade bereitstellen, oder Kugelgelenke, die darüber hinaus auch einen rotatorischen Freiheitsgrad aufweisen.

In einer ersten bevorzugten Ausgestaltung der erfindungsgemäßen Anbauvorrichtung, die einen einfachen, kostengünstigen Aufbau aufweist, jedoch in ihrer Funktionalität eingeschränkt ist, ist ein als üblicher Oberlenker ausgelegtes oberes mittleres Verbindungselement vorgesehen. Zwei untere seitliche Verbindungselemente sind als übliche starre Unterlenker ausgebildet. Im Bereich der freien Enden der Unterlenker greift jeweils das freie Ende eines Hubverbindungselements an. Wenn der Oberlenker als starres oder lediglich mechanisch verstellbares Verbindungselement ausgelegt ist, ergibt sich die Funktionalität einer üblichen Dreipunkt-Anbauvorrichtung, der zufolge sich das Gerät durch die Hubverbindungselemente automatisch anheben und absenken lässt. Wird hingegen der starre Oberlenker durch ein längenverstellbares Verbindungselement ersetzt, ergibt sich eine zusätzliche Funktionalität, der zufolge sich das Gerät automatisch um eine horizontale, quer zur Fahrzeuglängsrichtung erstreckende Achse verkippen lässt.

Bei den Ausgestaltungen mit lediglich einem Oberlenker verhalten sich die starren Unterlenker im Wesentlichen wie bei einer üblichen Dreipunkt-Anbauvorrichtung. Hier ist es von Vorteil bekannte Seitenstabilisierungen zu verwenden, die jeweils an einem mittleren Bereich der Unterlenker angreifen.

Als Seitenstabilisatoren werden heutzutage vorzugsweise Seitenstabilisierungs-Hydraulikzylinder verwendet, die eine automatische Seitenausrichtung innerhalb vorgegebener Grenzen ermöglichen. Anstelle dieser Seitenstabilisatoren kann die Funktion der hydraulischen Seitenstabilisierung auch durch eine weitere bevorzugte Ausgestaltung der erfindungsgemäßen Anbauvorrichtung dienen. Bei dieser Ausgestaltung sind an Stelle des lediglich einen Oberlenkers zwei obere längenverstellbare Verbindungselemente vorgesehen. Diese Konfiguration lässt sich aus der ersten Ausgestaltung durch einfaches Umrüsten herstellen, indem der einzige Oberlenker gegen zwei längenverstellbare Verbindungselemente ausgetauscht wird.

Für eine symmetrische Anordnung ist es zweckmäßig, die vorderen und die hinteren Anlenkstellen der beiden oberen Verbindungselemente jeweils auf gleicher Höhe anzuordnen. Vorzugsweise sind diese Verbindungselemente außerdem zueinander V-förmig ausgerichtet, wobei ihre ersten Enden einen größeren Abstand zueinander einnehmen als ihre zweiten Enden. Grundsätzlich kann die Basis des V wahlweise dem Fahrzeug oder dem Gerät zugewandt sein. Für eine Verbesserung der Funktionalität wird jedoch eine Anordnung bevorzugt, bei der die ersten Enden der oberen Verbindungselemente am Fahrzeugrumpf und die zweiten, nahe beieinander liegenden Enden der oberen Verbindungselemente am Gerät bzw. am Koppelrahmen angelenkt sind. Durch die V-förmige Anordnung wird ein weiterer steuerbarer Freiheitsgrad hinzugefügt, da nunmehr auch die seitliche Ausrichtung des Geräts zum Fahrzeug automatisch einstellbar ist.

In einer dritten bevorzugten Ausgestaltung der erfindungsgemäßen Anbauvorrichtung werden zwei obere, V-förmig zueinander angeordnete längenverstellbare Verbindungselemente, zwei untere seitliche längenverstellbare Verbindungselemente und zwei jeweils im Bereich der freien Enden der unteren Verbindungselemente angreifende Hubverbindungselemente verwendet. Die dritte Ausgestaltung ergibt sich aus der zweiten Ausgestaltung, indem die beiden starren Unterlenker gegen längenverstellbare Verbindungselemente ausgetauscht werden. Die dritte Ausgestaltung ermöglicht die Nutzung von sechs Freiheitsgraden, nämlich translatorische Bewegungen in drei Richtungen und rotatorische Bewegungen um drei Achsen. Damit ist die Funktionalität einer Hexapod-Hitch gegeben.

Eine weitere besonders bevorzugte Ausgestaltung der Erfindung sieht vor, dass die fahrzeugseitigen Anlenkstellen jeweils eines unteren Verbindungselements und die fahrzeugseitigen Anlenkstellen jeweils eines Hubverbindungselements in einer zur Fahrzeugaufstandfläche senkrechten Ebene liegen. Es ist des Weiteren zweckmäßig, die fahrzeugseitige Anlenkstelle des unteren Verbindungselements und des Hubverbindungselements in etwa senkrecht übereinander anzuordnen. Diese Ausgestaltungen ermöglichen ein freies seitliches Ausschwenken der Anbauvorrichtung, was bei einigen Anwendungen notwendig ist. Bei der oben beschriebenen zweiter und dritten Ausgestaltung müssen zum freien seitlichen Ausschwenken die beiden oberen längenverstellbaren Verbindungselemente auf Schwimmstellung geschaltet werden.

Es ist auch von Vorteil, die fahrzeugseitige Anlenkstelle eines Hubverbindungselements in der Nähe und in etwa senkrecht über der fahrzeugseitigen Anlenkstelle eines oberen Verbindungselements anzuordnen.

Es ist des Weiteren von Vorteil, wenn die oberen Verbindungselemente und die Hubverbindungselemente jeweils eine horizontale Konvergenz aufweisen und ihre fahrzeugseitigen Anlenkstellen enger zusammenliegen als ihre geräteseitigen Anlenkstellen. Durch diese Konvergenz ergibt sich ein Führungspunkt, dessen relative Lage zum Arbeitsfahrzeug durch entsprechende Ansteuerung der Verbindungselemente auf zweckmäßige Weise beeinflussbar ist, wie es die DE-A-10 120 732 beschreibt.

Zur Vermeidung einer Vielzahl unterschiedlicher und daher kostspieliger Bauteile ist es von Vorteil, möglichst viele der Anlenkstellen der längenverstellbaren Verbindungselemente auf der Fahrzeugrumpfseite und/oder auf der Geräteseite bzw. der Gerätekoppelrahmenseite identisch oder wenigstens gleichartig auszubilden.

Um einen einfach zu handhabenden modularen Nachrüstsatz zu erhalten, ist es von besonderem Vorteil die Anlenkstellen oder Koppelpunkte der Verbindungselemente als gesonderte Bauteile auszubilden, welche bedarfsweise am Fahrzeugrumpf und/oder am Gerät bzw. an dem Gerätekoppelrahmen montierbar und demontierbar sind. Es ist hierbei zweckmäßig, von vorneherein am Fahrzeugrumpf und am Gerät bzw. am Koppelrahmen die erforderlichen Befestigungsmöglichkeiten, beispielsweise in Form von Gewindebohrungen vorzusehen, so dass eine Umrüstung jederzeit möglich ist. Diese Ausbildung ermöglicht es, lediglich so viele Koppelpunkte zu verwenden wie aktuell benötigt werden. Überzählige Koppelpunkte brauchen nicht beschafft zu werden oder können demontiert werden.

Vorzugsweise ist jedem längenverstellbaren Verbindungselement eine eigene gesonderte Steueranordnung zugeordnet, beispielsweise wird für jeden Hydraulikzylinder eine gesonderte Hydraulikventilanordnung verwendet. Die Steueranordnungen können identisch oder gleichartig ausgebildet sein, so dass die Anzahl unterschiedlicher Bauteile gering gehalten wird.

Es ist des Weiteren von Vorteil die Steueranordnungen derart auszubilden, dass sie sich je nach Bedarf jederzeit problemlos am Fahrzeugrumpf oder Gerät bzw. Koppelrahmen montieren bzw. demontieren lassen, so dass die Anzahl der verwendeten Steueranordnungen dem jeweiligen Bedarf angepasst werden kann. Insbesondere um Bauraum zu sparen und eine gute Zugänglichkeit zu gewährleisten, können die Steuereinrichtungen in einer Reihe eng nebeneinander am Fahrzeugrumpf, beispielsweise auf einem Differentialgetriebegehäuse, montiert werden.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die perspektivische Darstellung einer ersten Ausführungsvariante der erfindungsgemäßen Anbauvorrichtung,
- Fig. 2: die perspektivische Darstellung einer Abwandlung der ersten Ausführungsvariante der erfindungsgemäßen Anbauvorrichtung,
- Fig. 3: die perspektivische Darstellung einer zweiten Ausführungsvariante der erfindungsgemäßen Anbauvorrichtung,
- Fig. 4: die perspektivische Darstellung einer dritten Ausführungsvariante der erfindungsgemäßen Anbauvorrichtung,
- Fig. 5: die Draufsicht auf die in Fig. 4 dargestellte dritte Ausführungsvariante und
- Fig. 6: die Seitenansicht der in Fig. 4 dargestellten dritten Ausführungsvariante.

Im Folgenden wurden für identisch oder gleichartig ausgebildete Bauteile mit gleicher Funktionalität dieselben Bezugsziffern verwendet.

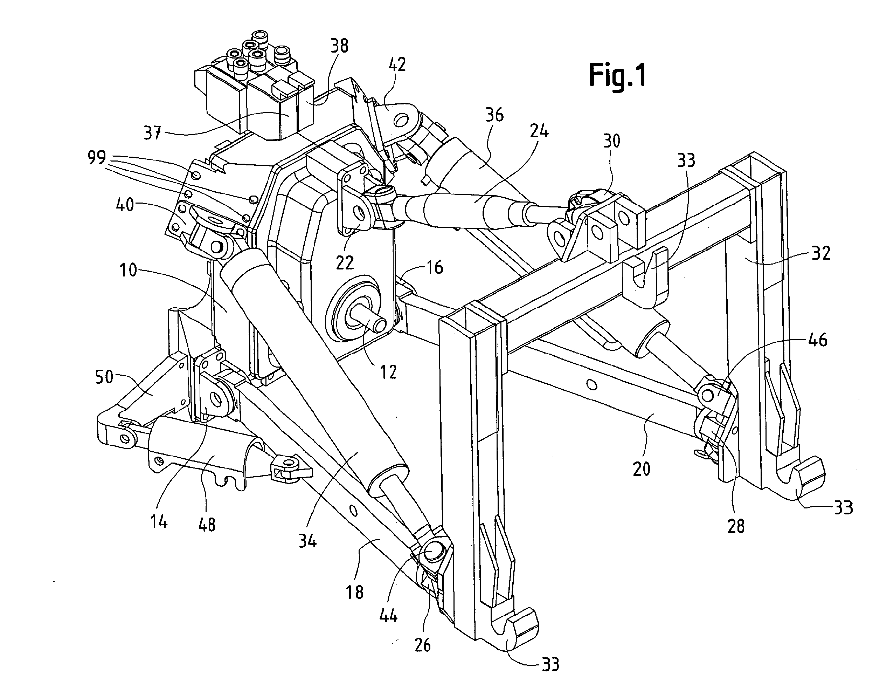

In Fig. 1 ist ein Teil eines Differentialgetriebegehäuses 10 erkennbar, das sich im Heck eines nicht näher dargestellten Ackerschleppers befindet und hier den Fahrzeugrumpf bildet. Im mittleren Bereich des Getriebegehäuses 10 tritt aus diesem eine Zapfwelle 12 aus. Auf jeder Seite des Getriebegehäuses 10 befindet sich an dessen unterem Bereich je eine Anlenkstelle 14, 16, die der Anlenkung je eines starren Verbindungselements 18, 20 dienen. Es handelt sich bei den Verbindungselementen 18, 20 um übliche Unterlenker, die als längliche, starre, in ihrer Länge nicht veränderbare Bauteile ausgebildet sind. Die Anlenkstellen 14, 16 können ebenfalls auf übliche Weise ausgebildet sein. Sie enthalten ein Kugelgelenk, so dass sich die Unterlenker 18, 20 einerseits um eine horizontal verlaufende Achse in vertikaler Richtung verschwenken und andererseits innerhalb enger Grenzen seitlich auslenken lassen.

Oberhalb der Zapfwelle 12 befindet sich eine mittlere, obere Anlenkstelle 22, die der Anlenkung eines oberen Verbindungselements 24 dient, welches als starrer Oberlenker ausgebildet ist. Bei dem starren Oberlenker 24 kann es sich beispielsweise um einen Oberlenker handeln, dessen Länge sich mechanisch durch Ein- oder Ausschrauben einer Spindel einstellen lässt. Die obere Anlenkstelle 22 enthält ein Kreuzgelenk, so dass sich der Oberlenker seitlich und in vertikaler Richtung gegenüber dem Getriebegehäuse 10 verschwenken lässt.

Die nicht am Getriebegehäuse angelenkten freien Enden der beiden Unterlenker 18, 20 und des Oberlenkers 24 sind mittels je einer Anlenkstelle 26, 28, 30 an einen als U-förmiger Portalrahmen ausgebildeten Gerätekoppelrahmen 32 angelenkt. Bei den Anlenkstellen 26, 28, 30 kann es sich beispielsweise um Kreuzgelenke handeln. Der Koppelrahmen 32 enthält drei Koppelhaken 33 zur Aufnahme eines nicht dargestellten Anbaugerätes. Alternativ ist es auch möglich die genannten freien Enden der Lenker 18, 20, 24 über entsprechende Anlenkstellen unmittelbar an ein Anbaugerät anzulenken.

Zum Anheben und Absenken des Koppelrahmens 32 bzw. des Anbaugeräts dienen zwei längenverstellbare Hubverbindungselemente 34, 36, welche zur Längenverstellung jeweils einen doppelseitig wirkenden Hydraulikzylinder enthalten. Die Ansteuerung der Hydraulikzylinder erfolgt über je eine hydraulische Steueranordnung 37, 38. Die Steueranordnungen 37, 38 sind nebeneinander auf der Oberseite des Getriebegehäuses 10 montiert und enthalten die erforderlichen üblichen Steuerventile.

Das fahrzeugseitige Ende jedes der beiden Hubverbindungselemente 34, 36 ist über eine als Kreuzgelenk ausgebildete Anlenkstelle 40, 42 am Getriebegehäuse 10 angelenkt. Das nicht am Getriebegehäuse angelenkte freie Ende jedes Hubverbindungselements 34, 36 greift nicht, wie bei bekannten Dreipunktanhängevorrichtungen üblich, an einem mittleren Bereich des zugehörigen Unterlenkers an. Es ist vielmehr über eine Anlenkstelle 44, 46 am Koppelrahmen 32 angelenkt. Alternativ hierzu kann das freie Ende des Hubverbindungselements 34, 36 auch unmittelbar an einem Anbaugerät angelenkt sein. Diese Wahl des Angriffpunktes des freien Endes des Hubverbindungselements 34, 36 hat den besonderen Vorteil, dass auf einfache Weise eine Erweiterung der anhand der Fig. 1 beschriebenen ersten Ausführungsvariante der Erfindung zu einer Ausführungsvariante mit gesteigerter Funktionalität möglich ist, wobei die Hubverbindungselemente 34, 36 beibehalten werden können und eine Ausführungsvariante entsteht, deren Verbindungselemente in geschlossenen kinematischen Ketten angeordnet sind, wodurch eine hohe Anzahl von Freiheitsgraden für die Anbauvorrichtung erzielbar ist.

Die Anlenkstelle 44, 46 des freien Endes jedes der Hubverbindungselemente 34, 36 liegt in unmittelbarer Nähe zur Anlenkstelle 26, 28 des freien Endes des zugehörigen Unterlenkers 18, 20. Die fahrzeugseitige Anlenkstelle 40, 42 jedes Hubverbindungselements 34, 36 nimmt hingegen einen größeren Abstand zu der fahrzeugseitigen Anlenkstelle 14, 16 des entsprechenden Unterlenkers 18, 20 ein und liegt im Wesentlichen senkrecht über dieser. Damit liegen die fahrzeugseitigen Anlenkstellen 14, 40 eines Unterlenkers 18, 20 und des zugehörigen Hubverbindungselements 34, 36 im Wesentlichen in einer zur Fahrzeugsaufstandfläche senkrechten Ebene. Diese Ausbildung macht eine seitliche Auslenkung des Koppelrahmens bzw. des Anbaugeräts relativ zum Fahrzeug möglich.

Um die seitliche Auslenkung des Koppelrahmens 32 bzw. des Anbaugerätes zu begrenzen oder einstellen zu können, greift auf an sich übliche Weise an einem mittleren Bereich jedes Unterlenkers 18, 20 je ein mechanischer Seitenstabilisator 48 an, dessen anderes Ende unter Zwischenschaltung einer Halterung 50 an dem Getriebegehäuse 10 oder Fahrzeugchassis angelenkt ist. In Fig. 1 ist nur einer der beiden Seitenstabilisatoren 48 erkennbar. Als Seitenstabilisator kommen einerseits als Anschlag wirkende aus dem Stand der Technik bekannte passive Elemente aber auch längenverstellbare aktive Elemente in Betracht.

Die in Fig. 1 dargestellte erfindungsgemäße Anbauvorrichtung hat im Wesentlichen die gleiche Funktionalität wie eine bisher übliche Anbauvorrichtung.

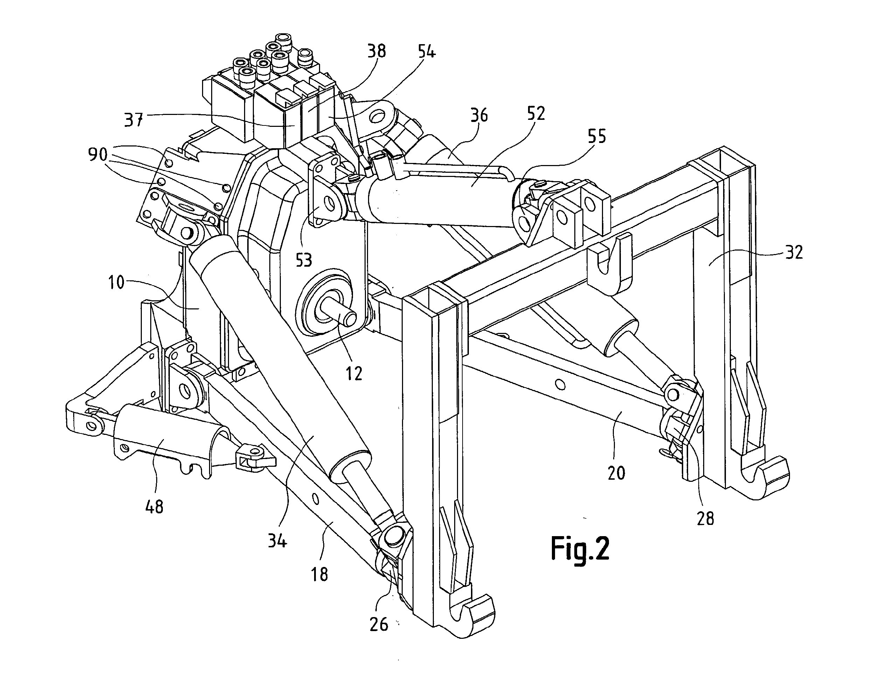

Die aus Fig. 2 hervorgehende Ausführungsvariante der erfindungsgemäßen Anbauvorrichtung unterscheidet sich von der in Fig. 1 dargestellten Anbauvorrichtung lediglich durch die Ausbildung des Oberlenkers. Gemäß Fig. 2 wird als Oberlenker ein längenverstellbares Verbindungselement 52 verwendet, welches einen Hydraulikzylinder enthält. Dieses obere längenverstellbare Verbindungselement 52 ist baugleich mit den beiden Hubverbindungselementen 34, 36. Es wird durch eine gesonderte Steueranordnung 54, die neben den bereits erwähnten Steueranordnungen 37, 38 auf dem Getriebegehäuse 10 montierbar ist, angesteuert. Der längenverstellbare Oberlenker 52 ist durch eine Anlenkstelle 53 am Getriebegehäuse 10 und durch eine weitere Anlenkstelle 55 am Koppelrahmen 32 angelenkt. Beide Anlenkstellen 53, 55 sind als Kreuzgelenke ausgebildet.

Die Anbauvorrichtung gemäß Fig. 2 ermöglicht neben der Funktionalität der in Fig. 1 dargestellten Anbauvorrichtung ein Verkippen des Anbaugeräts um eine horizontale, quer zur Fahrzeuglängsachse verlaufende Schwenkachse, die im Wesentlichen durch die beiden geräteseitigen Anlenkstellen 26, 28 der starren Unterlenker 18, 20 verläuft.

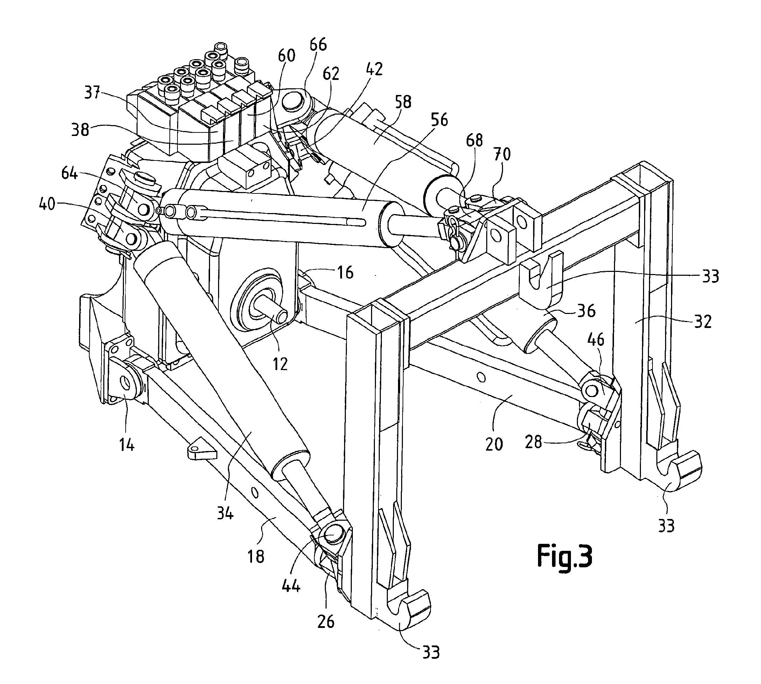

Die in Fig. 3 dargestellte zweite Ausführungsvariante der erfindungsgemäßen Anbauvorrichtung verwendet an Stelle eines einzigen oberen Verbindungselements zwei längenverstellbare Verbindungselemente 56, 58, die jeweils durch eine zugehörige Steueranordnung 60, 62 angesteuert werden. Die beiden oberen längenverstellbaren Verbindungselemente 56, 58 sind im Wesentlichen baugleich mit den beiden Hubverbindungselementen 34, 36. Auch die vier Steueranordnungen 37, 38, 60, 62 sind vorzugsweise baugleich ausgebildet.

Die beiden oberen Verbindungselemente 56, 58 sind V-förmig zueinander angeordnet. Die Anlenkstellen 64, 66 ihrer fahrzeugseitigen Enden liegen weit auseinander und befinden sich in der Nähe und unmittelbar oberhalb der fahrzeugseitigen Anlenkstellen 40, 42 der Hubverbindungselemente 34, 36. Die beiden Anlenkstellen 68, 70 ihrer geräteseitigen Enden liegen miteinander auf gleicher Höhe und dicht nebeneinander. Sie sind am Koppelrahmen 32 befestigt und können alternativ hierzu auch am Anbaugerät befestigt sein.

Bei der in Fig. 3 dargestellten zweiten Ausführungsvariante der Anbauvorrichtung können die in den Figuren 1 und 2 gezeigten Stabilisatoren 48 entfallen, da nunmehr die oberen längenverstellbaren Verbindungselemente 56, 58 die Funktion der Seitenverschiebung des Geräterahmens 32 übernehmen können.

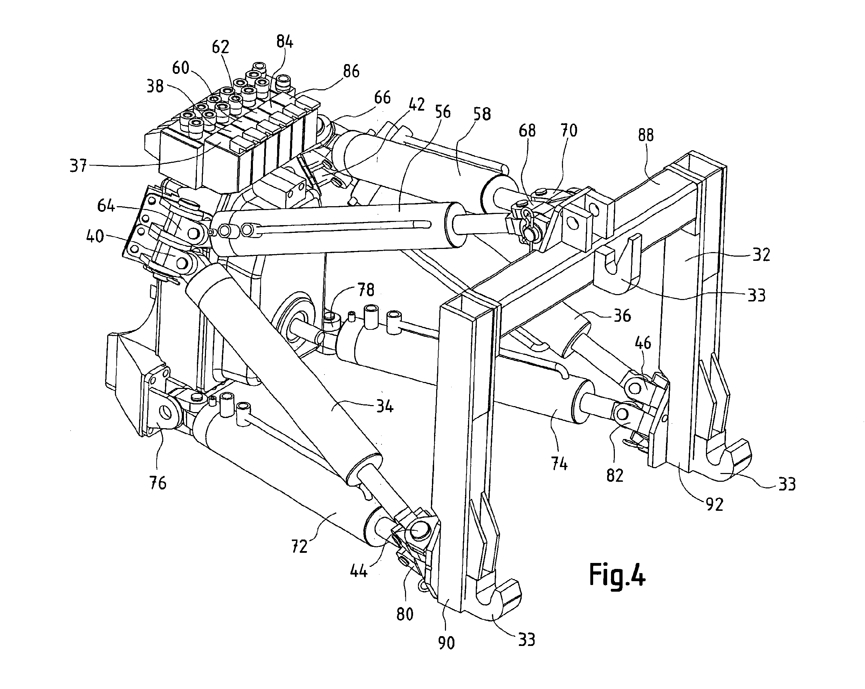

Aus Fig. 4 geht eine dritte Ausführungsvariante der erfindungsgemäßen Anbauvorrichtung hervor. Es handelt sich um eine weitere Ausbaustufe, bei der die beiden starren Unterlenker 18, 20 der Figuren 1 bis 3 gegen untere längenverstellbare Verbindungselemente 72, 74 ausgetauscht wurden. Die fahrzeugseitigen Anlenkstellen 76, 78 der unteren Verbindungselemente 72, 74 und ihre geräteseitigen Anlenkstellen 80, 82 sind angepasst und als Kreuzgelenke ausgebildet. Bei dieser Anbauvorrichtung steht der Anbaurahmen 32 über sechs identische oder wenigstens gleichartige längenverstellbare Verbindungselemente 34, 36, 56, 58, 72, 74 mit dem Fahrzeugrumpf bzw. dem Getriebegehäuse 10 in Verbindung. Die Verbindungselemente 34, 36, 56, 58, 72, 74 sind in geschlossenen kinematischen Ketten angeordnet. Sie bilden eine Hexapod-Anordnung. Jedem der sechs Verbindungselemente 34, 36, 56, 58, 72, 74 ist eine eigene Steueranordnung 37, 38, 60, 62, 84, 86 zugeordnet. Die Steueranordnungen 37, 38, 60, 62, 84, 86 sind nebeneinander auf dem Getriebegehäuse 10 montiert.

In der Mitte des oberen Querholms 88 des Geräterahmens 32 befinden sich die Anlenkstellen 68, 70 der beiden oberen Verbindungselemente 56, 58, die eng nebeneinander liegen. An jedem unteren freien Ende 90, 92 des Geräterahmens 32 befinden sich die Anlenkstellen 44, 80 bzw. 46, 82 je eines Hubverbindungselements 34 bzw. 36 und je eines unteren Verbindungselements 72 bzw. 74. Damit liegen die geräteseitigen Anlenkstellen der sechs Verbindungselemente 34, 36, 56, 58, 72, 74 im Wesentlichen in den Eckpunkten eines gleichschenkligen Dreiecks.

Die unteren Verbindungselemente 72, 74 verlaufen im Wesentlichen horizontal und sind mittels Anlenkstellen 76, 78 an seitlichen, unteren Bereichen des Getriebegehäuses 10 angelenkt. In etwa senkrecht über diesen Anlenkstellen 76, 78 befinden sich jeweils die beiden eng beieinanderliegenden Anlenkstellen 40, 64 bzw. 42, 66 eines der beiden Hubverbindungselemente 34 bzw. 36 sowie eines der oberen Verbindungselemente 56 bzw. 58.

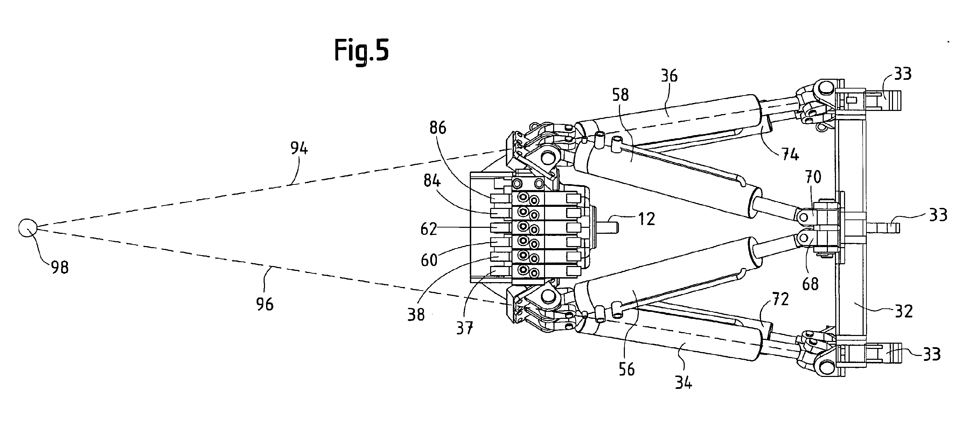

Wie aus Fig. 5 ersichtlich, verlaufen die beiden unteren Verbindungselemente 72, 74 bzw. die beiden Hubverbindungselemente 56, 58 nicht parallel zueinander. Vielmehr weisen sie jeweils eine horizontale Konvergenz auf, so dass sich ihre Fluchtlinien 94, 96 in einem horizontalen Führungspunkt 98 schneiden. Des Weiteren sind die Anlenkstellen 76, 78, 40, 42, 80, 82, 44, 46 der unteren Verbindungselemente 72, 74 und der Hubverbindungselemente 56, 58 so gewählt, dass die Hubverbindungselemente 34, 36 senkrecht über den unteren Verbindungselementen 72, 74 liegen. Damit liegen auch hier die fahrzeugseitigen Anlenkstellen 76, 40 eines unteren Verbindungselements 72, 74 und des zugehörigen Hubverbindungselements 34, 36 im Wesentlichen in einer zur Fahrzeugaufstandfläche senkrechten verlaufenden Ebene.

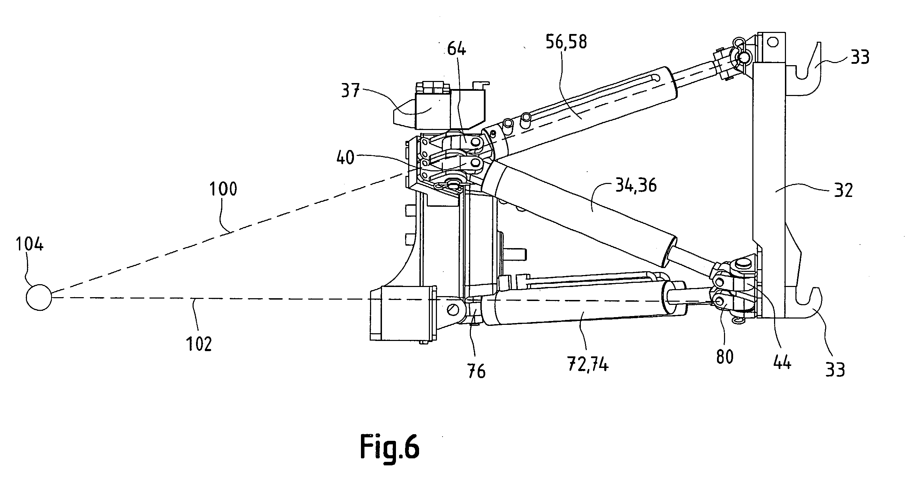

Wie aus Fig. 6 ersichtlich, verlaufen die beiden unteren Verbindungselemente 72, 74 einerseits und die beiden oberen Verbindungselemente 56, 58 andererseits nicht parallel zueinander. Vielmehr weisen sie eine vertikale Konvergenz auf, so dass sich ihre Fluchtlinien 100, 102 in einem vertikalen Führungspunkt 104 schneiden. Der vertikale Führungspunkt 104 und der horizontale Führungspunkt 98 nehmen in der Regel nicht dieselbe räumliche Lage ein.

Die Bauteile der erfindungsgemäßen Anbauvorrichtung sind standardisiert, so dass eine geringe Anzahl unterschiedlicher Bauteile erforderlich ist. Um eine beliebige Umrüstung zwischen den drei beschriebenen Ausführungsvarianten vornehmen zu können, werden folgende Bauteile verwendet:
- sechs identische längenverstellbare Verbindungselemente 34, 36, 56, 58, 72, 74 mit Hydraulikzylinder und mit als Kreuzgelenk ausgebildeten Anlenkstellen 40, 42, 44, 46, 64, 66, 68, 70, 76, 78, 80, 82,
- sechs identische Steueranordnungen 37, 38, 60, 62, 84, 86 mit Steuerventilen und den nicht näher gezeigten Hydraulikleitungen zur Versorgung der längenverstellbaren Verbindungselemente 34, 36, 56, 58, 72, 74,
- zwei gleichartige als Unterlenker dienende starre Verbindungselemente 18, 20 mit zugehörigen Kugelgelenken enthaltenden Anlenkstellen 14, 16, 26, 28,
- ein als Oberlenker dienendes starres Verbindungselement 24 mit Anlenkstellen 22, 30,
- zwei mechanische Seitenstabilisatoren 48 und
- ein Koppelrahmen 32.

Am Getriebegehäuse 10 und gegebenenfalls am Koppelrahmen 32 sind Befestigungsmittel in Form von Gewindebohrungen vorgesehen, die eine wahlweise oder bedarfsweise Befestigung der Anlenkstellen am Getriebegehäuse 10 bzw. am Koppelrahmen 32 ermöglichen. Es ist zweckmäßig, die Anbauvorrichtung derart auszulegen, dass für einen Wechsel zwischen starren und längenverstellbaren Verbindungselementen dieselben Befestigungsmittel verwendet werden können. So lässt sich beispielsweise die Anlenkstelle 14 eines starren Unterlenkers 18 an derselben Stelle des Getriebegehäuses 10 montieren wie die Anlenkstelle 76 eines unteren verstellbaren Verbindungselements 72.

Es werden jeweils die Anlenkstellen montiert, deren Verbindungselemente zu der ausgewählten Ausführungsvarianten gehören. Da beispielsweise bei der ersten Ausführungsvariante nicht zwei sondern nur ein seitliches oberes Verbindungselement verwendet wird, bleiben Gewindebohrungen 99 für die entsprechenden Befestigungselemente frei. Die Anzahl der verwendeten und am Getriebegehäuse 10 montierten Steueranordnungen 37, 38, 60, 62, 84, 86 entspricht der Anzahl der verwendeten längenverstellbaren Verbindungselemente.

Die Anlenkstellen oder Gelenkstellen der längenveränderlichen Verbindungselemente sind in den beschriebenen Ausführungsbeispielen als Kreuzgelenke ausgebildet. Die Anlenkstellen oder Gelenkstellen der starren Unterlenker enthalten hingegen entweder ein bei Unterlenkern übliches Kugelgelenk, oder auch Kreuzgelenke, die den bereits beschriebenen Kreuzgelenken für die Hydraulikzylinder gleichen.

Auch wenn die Erfindung lediglich anhand von wenigen Ausführungsbeispielen beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Anbauvorrichtung für ein Arbeitsfahrzeug mit gelenkig am Fahrzeugrumpf befestigbaren Verbindungselementen (18, 20, 24, 34, 36, 52, 56, 58, 72, 74), an deren freien Enden unmittelbar, bzw. mittelbar über einen Gerätekoppelrahmen (32), ein Gerät gelenkig befestigbar ist, wobei wenigstens ein oberes Verbindungselement (24, 52, 56, 58), zwei untere Verbindungselemente (18, 20, 72, 74) und zwei längenverstellbare Hubverbindungselemente (34, 36), durch die sich das Gerät anheben und absenken lässt, vorgesehen sind, **dadurch gekennzeichnet, dass** die Hubverbindungselemente (34, 36) jeweils im Bereich der freien Enden des zugehörigen unteren Verbindungselements (18, 20, 72, 74) angreifen, dass ein Bausatz aus wahlweise starren und längenverstellbaren Verbindungselementen (18, 20, 24, 34, 36, 52, 56, 58, 72, 74) vorgesehen ist und dass durch Austauschen, Hinzufügen bzw. Entfernen von Verbindungselementen (18, 20, 24, 52, 56, 58, 72, 74) des Bausatzes die Funktionalität der Anbauvorrichtung veränderbar ist.

2. Anbauvorrichtung nach Anspruch 1, **dadurch gekennzeichnet, dass** die längenverstellbaren Verbindungselemente (34, 36, 52, 56, 58, 72, 74) des Bausatzes im Wesentlichen identisch ausgebildet sind.

3. Anbauvorrichtung nach Anspruch 1 oder 2, **dadurch gekennzeichnet, dass** jedes längenverstellbare Verbindungselement (34, 36, 52, 56, 58, 72, 74) einen Hydraulikzylinder, insbesondere einen doppelseitig wirkenden Hydraulikzylinder, enthält.

4. Anbauvorrichtung nach einem der vorhergehenden Ansprüche, **dadurch gekennzeichnet, dass** sich die Verbindungselemente (18, 20, 24, 34, 36, 52, 56, 58, 72, 74) in geschlossenen kinematischen Ketten, insbesondere nach Art eines Hexapod anordnen lassen.

5. Anbauvorrichtung nach einem der vorhergehenden Ansprüche, **dadurch gekennzeichnet, dass** die gelenkige Kopplung zwischen Verbindungselement (18, 20, 24, 34, 36, 52, 56, 58, 72, 74) einerseits und Fahrzeugrumpf (10) bzw. Koppelrahmen (32) oder Gerät andererseits durch Anlenkstellen (14, 16, 22, 26, 28, 30, 40, 42, 44, 46, 53, 55, 64, 66, 68, 70, 76, 78, 80, 82), die eine Relativbewegung in wenigstens zwei Freiheitsgraden erlauben, erfolgt.

6. Anbauvorrichtung nach einem der vorhergehenden Ansprüche, **dadurch gekennzeichnet, dass** ein oberes, mittleres Verbindungselement (24, 52) als üblicher Oberlenker ausgelegt ist, dass zwei untere, seitliche Verbindungselemente (18, 20) als übliche starre Unterlenker ausgebildet sind und dass im Bereich der freien Enden der Unterlenker (18, 20) jeweils das freie Ende eines Hubverbindungselements (34, 36) angreift.

7. Anbauvorrichtung nach Anspruch 6, **dadurch gekennzeichnet, dass** der Oberlenker wahlweise als starres Verbindungselement (24) oder als längenverstellbares Verbindungselement (52) ausgebildet ist.

8. Anbauvorrichtung nach einem der Ansprüche 1 bis 5, **dadurch gekennzeichnet, dass** zwei obere längenverstellbare Verbindungselemente (56, 58) vorgesehen sind, dass zwei untere, seitliche Verbindungselemente (18, 20) als übliche starre Unterlenker ausgebildet sind und dass im Bereich der freien Enden der Unterlenker (18, 20) jeweils das freie Ende eines Hubverbindungselements (34, 36) angreift.

9. Anbauvorrichtung nach einem der Ansprüche 6 bis 8, **dadurch gekennzeichnet, dass** in einem mittleren Bereich wenigstens eines starren unteren Verbindungselements (18, 20) ein Seitenstabilisator (48), angelenkt ist.

10. Anbauvorrichtung nach einem der Ansprüche 1 bis 5, **dadurch gekennzeichnet, dass** zwei obere, längenverstellbare Verbindungselemente (56, 58), zwei untere, seitliche längenverstellbare Verbindungselemente (72, 74) und zwei jeweils im Bereich der freien Enden der unteren Verbindungselemente (72, 74) angreifende Hubverbindungselemente (34, 36) vorgesehen sind.

11. Anbauvorrichtung nach einem der Ansprüche 8 bis 10,
**dadurch gekennzeichnet, dass** die beiden oberen Verbindungselemente (56, 58) auf gleicher Höhe miteinander angeordnet und zueinander V-förmig ausgerichtet sind, wobei ihre ersten Enden einen größeren Abstand zueinander einnehmen als ihre zweiten Enden und dass gegebenenfalls die ersten Enden der oberen Verbindungselemente (56, 58) am Fahrzeugrumpf (10) und die zweiten Enden der oberen Verbindungselemente (56, 58) am Gerät bzw. am Koppelrahmen (32) angelenkt sind.

12. Anbauvorrichtung nach einem der vorhergehenden Ansprüche, **dadurch gekennzeichnet, dass** die fahrzeugseitigen Anlenkstellen (14, 16, 76, 78, 40, 42) eines unteren Verbindungselements (18, 20, 72, 74) und eines Hubverbindungselements (34, 36) in einer zur Fahrzeugaufstandfläche senkrechten Ebene liegen und/oder dass die fahrzeugseitige Anlenkstelle (40, 42) eines Hubverbindungselements (34, 36) in der Nähe der fahrzeugseitigen Anlenkstelle (64, 66) eines oberen Verbindungselements (56, 58) liegt.

13. Anbauvorrichtung nach einem der vorhergehenden Ansprüche, **dadurch gekennzeichnet, dass** die unteren Verbindungselemente (18, 20, 72, 74) und/oder die Hubverbindungselemente (34, 36) eine horizontale Konvergenz aufweisen und ihre fahrzeugseitigen Anlenkstellen (14, 16, 76, 78, 40, 42) enger zusammenliegen als ihre geräteseitigen Anlenkstellen (26, 28, 80, 82, 44, 46) und/oder dass das obere Verbindungselement (24, 52) bzw. die oberen Verbindungselemente (56, 58) mit den unteren Verbindungselementen (18, 20, 72, 74) eine vertikale Konvergenz aufweisen und ihre fahrzeugseitigen Anlenkstellen (22, 53, 64, 66, 14, 16, 76, 78) enger zusammenliegen als ihre geräteseitigen Anlenkstellen (30, 55, 68, 70, 26, 28, 80, 82).

14. Anbauvorrichtung nach einem der vorhergehenden Ansprüche, **dadurch gekennzeichnet, dass** die fahrzeugseitigen und/oder die geräteseitigen Anlenkstellen (40, 42, 44, 46, 53, 55, 64, 66, 68, 70, 76, 78, 80, 82) der längenverstellbaren Verbindungselementen (34, 36, 52, 56, 58, 72, 74) identisch oder gleichartig ausgebildet sind und/oder dass die Anlenkstellen (40, 42, 44, 46, 53, 55, 64, 66, 68, 70, 76, 78, 80, 82) der längenverstellbaren Verbindungselemente (34, 36, 52, 56, 58, 72, 74) als Kreuzgelenke ausgebildet sind.

15. Anbauvorrichtung nach Anspruch 14, **dadurch gekennzeichnet, dass** jede Anlenkstelle (14, 16, 22, 26, 28, 40, 42, 44, 46, 53, 55, 64, 66, 68, 70, 76, 78, 80, 82) derart ausgebildet ist, dass sie sich jederzeit bedarfsweise am Fahrzeugrumpf (10) und/oder am Gerät bzw. an dem Gerätekoppelrahmen (32) montieren und demontieren lässt.

16. Anbauvorrichtung nach einem der vorhergehenden Ansprüche, **dadurch gekennzeichnet, dass** jedem längenverstellbaren Verbindungselement (34, 36, 52, 56, 58, 72, 74) eine gesonderte Steueranordnung (37, 38, 60, 62, 84, 86) zugeordnet ist und dass gegebenenfalls jede Steueranordnung (37, 38, 54, 56, 60, 62, 84, 86) derart ausgebildet ist, dass sie sich jederzeit bedarfsweise am Fahrzeug insbesondere am Fahrzeugrumpf (10) montieren und demontieren lässt.

17. Anbauvorrichtung nach einem der vorhergehenden Ansprüche,
**dadurch gekennzeichnet, dass** am Fahrzeugrumpf (10) und/oder an dem Gerätekoppelrahmen (32) Befestigungsmittel (99) vorgesehen sind, die eine wahlweise Befestigung unterschiedlicher Kombinationen von starren und längenverstellbaren Verbindungselementen (18, 20, 24, 34, 36, 52, 56, 58, 72, 74) ermöglichen.
